# EUROPÄISCHE PATENTSCHRIFT

(11) **EP 0 788 873 B1**
(45) Veröffentlichungstag und Bekanntmachung des Hinweises auf die Patenterteilung: **03.04.2002**
(21) Anmeldenummer: 97101404.8
(22) Anmeldetag: 30.01.1997
(51) Int. Cl.: B32B 5/24, D04H 13/00

(54) **Verfahren zur Herstellung eines mehrlagigen elastischen Flächengebildes sowie mehrlagiges elastisches Flächengebilde**
Method for producing a multilayered elastic sheetlike product and multilayered elastic sheetlike product
Procédé de fabrication d'un produit stratifié élastique ou forme de feuille et produit stratifié élastique ou forme de feuille

(30) Priorität: 10.02.1996 DE 19604956
(43) Veröffentlichungstag der Anmeldung: 13.08.1997
(73) Patentinhaber: Corovin GmbH, D-31224 Peine (DE)
(72) Erfinder: Boich, Heinz-Horst, 31224 Peine (DE)
(74) Vertreter: Patentanwälte Thömen & Körner

(56) Entgegenhaltungen:
- EP-A- 0 432 763
- EP-A- 0 707 106
- DE-A- 4 243 012
- US-A- 3 025 199
- US-A- 4 720 415

## Beschreibung

Die Erfindung betrifft ein Verfahren zur Herstellung eines mehrlagigen elastischen Flächengebildes nach dem Oberbegriff des Anspruchs 1 sowie ein mehrlagiges elastisches Flächengebilde nach dem Oberbegriff des Anspruchs 10.

Ein mehrlagiges elastisches Flächengebilde ist bereits aus der EP 0 321 980 A bekannt. Es umfaßt eine unelastische Faser- oder Filamentlage und eine elastische Lage. Die unelastische Lage wird mit der gedehnten elastischen Lage durch einen Thermobondingprozeß an beabstandeten Verbindungsstellen verbunden und anschließend das gesamte Flächengebilde entspannt. Dabei wirft sich die unelastische Faser- oder Filamentlage zwischen den Verbindungsstellen senkrecht zur Flächenebene auf. Bei Dehnung des Flächengebildes reduziert sich die Aufwerfung, bis sich die Fasern der Faser- oder Filamentlage parallel zur Flächenebene ausgerichtet haben.

Ferner ist aus der DE 42 43 012 A1 ein mehrlagiges elastisches Flächengebilde bekannt, bei dem eine elastische und eine unelastische Lage an zueinander beabstandeten Verbindungsstellen verbunden und anschließend gedehnt werden. Die elastische Lage stellt sich nach der ersten Dehnung zurück, während die unelastische Lage eine bleibende Dehnung erfährt und sich zwischen den Verbindungsstellen senkrecht zur Flächenebene aufwirft. Für die unelastische Lage kommen nur solche Fasermaterialien in Betracht, die eine hohe bleibende Dehnung besitzen.

Aus der nur bezüglich der Neuheit zu berücksichtigenden EP 0 707 106 A1 ist es bekannt, dass ein elastischer Film mit einem vorverstreckten Material beschichtet wird. Beide Materialien sind dabei in einem ungespannten Zustand. Eine Seite des elastischen Films wird mit einem thermoplastischen Film abgedeckt, um ein Verbinden von Vliesstoff und elastischem Film auf dieser Seite zu verhindern.

Als nächstkommender Stand der Technik wird von der EP 0 432 763 A1 ausgegangen. Aus dieser ist es bekannt, einen elastischen Film mit einem vorgestreckten Vliesstoff an Verbindungsstellen zu verbinden, während sich der elastische Film in einem gespannten Zustand befindet. Daher wölbt sich zwischen Verbindungsstellen von Vliesstoff und Film bei entspanntem Film der Vliesstoff.

Der Erfindung liegt die Aufgabe zugrunde, ein Verfahren zur Herstellung eines mehrlagigen elastischen Flächengebildes anzugeben sowie ein mehrlagiges elastisches Flächengebilde zu schaffen, das in einer Dehnungsrichtung die Wegreserve ihrer unelastischen Lage durch Ausrichten der Fasern in der Flächenebene bezieht.

Diese Aufgabe wird bei einem Verfahren nach dem Oberbegriff des Anspruchs 1 sowie einem mehrlagigen elastischen Flächengebilde nach dem Oberbegriff des Anspruchs 10 durch die jeweils im Kennzeichen angegebenen Merkmale gelöst.

Gemäß der Erfindung wird ein mehrlagiges elastisches Flächengebilde aus wenigstens einer gummielastischen Lage aus einem Film, einer Folie oder einer Faserstruktur und wenigstens einer mit der gummielastischen Lage an bleibenden Verbindungsstellen verbundenen verfestigten unelastischen Faservlies zur Verfügung gestellt. Die unelastische Faservlieslage wird vor ihrer Verbindung mit der gummielastischen Lage vorverstreckt und die unelastische Faservlieslage im vorverstreckten Zustand mit der gummielastischen Lage verbunden.. Die Fasern der unelastischen Faservlieslage werden im wesentlichen in Richtung der Vorverstreckungsrichtung ausgerichtet. Zwischen der unelastischen Faservlieslage und der gummielastischen Lage wird teilflächig eine dehäsive Schicht angeordnet, wobei ein von der dehäsiven Schicht freigelassener Bereich zwischen der gummielastischen Lage und der Faservlieslage eine bleibende Verbindungsstelle wird.

Durch die Vorverstreckung der verfestigten unelastischen Faservlieslage richten sich Fasern im wesentlichen in Richtung der Vorverstreckungsrichtung aus und behalten diese Ausrichtung auch nach Verbindung mit der gummielastischen Lage bei, sofern diese entspannt ist. Eine Dehnbarkeit des Verbundmaterials in Querrichtung zur Vorverstreckungsrichtung wird dadurch ermöglicht, daß sich die Fasern zwischen den Verbindungsstellen mit der gummielastischen Lage nach Art eines Scherengatters auslenken lassen. In Abhängigkeit der Dehnung richten sie die Fasern aus der ursprünglichen Richtung längs zur Vorverstreckungsrichtung dann in Dehnungsrichtung aus. Die Wegreserve wird hier also aus dem Auslenken der Fasern in der Flächenebene bezogen. Die Lagendicke und das Oberflächenprofil der unelastischen Lage ändern sich hierbei nicht.

Gemäß einer Weiterbildung kann zusätzlich die gummielastische Lage vor der Verbindung mit der unelastischen Faservlieslage in Richtung der Vorverstreckungsrichtung der unelastischen Faservlieslage gedehnt, im gedehnten Zustand mit der vorverstreckten unelastische Faservlieslage verbunden und anschließend das entstandene mehrlagige Flächengebilde entspannt werden.

Dieses Flächengebilde ist in zwei Dimensionen dehnbar, nämlich einerseits in Vorverstreckungsrichtung der unelastischen Faservlieslage und andererseits quer dazu. Dabei bezieht das Flächengebilde die Wegreserve ihrer unelastischen Lage bei Dehnung in Vorverstreckungsrichtung aus den Aufwerfungen der Fasern zwischen den Verbindungsstellen und quer dazu aus der Ausrichtung der Fasern in der Flächenebene.

Vorzugsweise wird die Verbindungsfläche der gummielastischen Lage und/oder der unelastischen Faservlieslage mit einer teilflächigen unter Ausschluß vorgesehener Verbindungsstellen ausgebildeten dehäsiven Beschichtung versehen. Mittels eines Bondingprozesses wird dann eine vollflächige Verbindung zwischen der gummielastischen Lage und der unelastischen Faservlieslage erzeugt. Schließlich werden Bereiche der vollflächigen Verbindung bei nachfolgender Dehnung in Querrichtung zur Richtung der Vorverstreckung und bei zusätzlicher während der Verbindung mit der ververstreckten unelastischen Faservlieslage in Richtung der Vorverstreckungsrichtung gedehnter gummielastischer Lage bei nachfolgender Entspannung bis auf bleibende Verbindungsstellen wieder gelöst.

Der Vorteil dieser Maßnahme besteht darin, daß im Bondingprozeß, der z. B. durch Thermobonding oder Ultra-schallbonding ausgeführt sin kann, ein gleichmäßiger Druck auf die aufeinander gelegte gummielastische Lage und die unelastische Faservlieslage ausgeübt werden kann. Beschädigungen, die durch punktuelle Drücke zu einem Ausweichen des Materials zu den Seiten und damit zu einer Verringerung der Schichtdicke an den vorgesehenen Verbindungsstellen führen würden, können daher nicht auftreten. Dies gilt besonders, wenn die elastische Lage durch die Dehnung während des Bondingprozesses im Querschnitt verringert ist. Trotzdem erfolgt eine bleibende Verbindung der unelastischen Faservlieslage mit der gummielastischen Lage nur an diskreten Verbindungsstellen, da die dehäsive Beschichtung eine Ablösung der Schichten in den anderen Bereichen ermöglicht, sobald die gummielastische Lage in Querrichtung zur Vorverstreckungsrichtung der unelastischen gedehnt bzw. in Vorverstreckungsrichtung entspannt wird.

Die unelastische Faservlieslage kann längs oder quer zur Produktionsrichtung vorverstreckt werden. Bevorzugt wird eine Vorverstreckung längs zur Produktionsrichtung, da dies einerseits die Durchführung der Vorverstreckung erleichtert, andererseits - bei Verzicht auf eine zusätzliche Dehnbarkeit in Produktionsrichtung - den Transport in einer Produktionsstraße und die Weiterverarbeitung erleichtert, da das Material in Produktionsrichtung nicht nachgibt.

Die unelastische Faservlieslage kann bis mindestens 50 % der maximalen Reißdehnung vorverstreckt werden.

Dadurch ergibt sich eine weitgehende Ausrichtung aller Fasern in Vorverstreckungsrichtung und auch eine Vergrößerung der Abstände der Bondierungspunkte der verfestigten Faservlieslage, was die spätere Auslenkbarkeit der Fasern begünstigt. Außerdem erhöhen sich die erforderlichen Kräfte für eine weitere Verstreckung, wodurch das zusammengesetzte elastische Flächengebilde sicherer gegen Überdehnung wird.

In der Praxis kann die unelastische Faservlieslage so vorverstreckt werden, daß sie bei Vorverstreckung längs zur Produktionsrichtung ein Festigkeitsverhältnis längs zu quer von 0,8 zu 1,2 bis 20 zu 3 und bei Vorverstrekkung quer zur Produktionsrichtung ein Festigkeitsverhältnis quer zu längs von 0,8 zu 1,2 bis 20 zu 3 aufweist.

Zur Erzielung einer Elastizität in Verstreckungsrichtung der unelastischen Faservlieslage kann die gummielastischen Lage vor ihrer Verbindung mit der unelastischen Faservlieslage um bis zu 150 % ihrer Ausgangslänge gedehnt werden.

Da die Faservlieslage unelastisch ist, kommt es nach der Entspannung der gummielastischen Lage dann zu einer Aufwerfung der Fasern, die um das Maß dieser Dehnung länger als die Abstände zwischen den Verbindungsstellen sind.

Diese Aufwerfung ist jedoch verhältnismäßig gering und daher optisch nicht störend.

Die dehäsive Beschichtung kann mit Farbstoffen oder Farbpigmenten versehen werden. Dadurch läßt sich eine farbliche Gestaltung erreichen, ohne daß das Flächengebilde bedruckt werden muß.

Die dehäsive Beschichtung kann zwischen 5 - 90 % der Verbindungsfläche bedecken. Auf diese Weise lassen sich die Abstände der vorgesehenen Verbindungsstellen sowie deren Fläche verändern, so daß sich auf diese Weise die Dehnbarkeit beeinflussen läßt.

Im Falle einer als Film oder Folie ausgebildeten gummielastischen Lage kann diese einen mehrschichtigen Aufbau besitzen, wobei die als Verbindungsfläche dienende Schicht einen um wenigstens 20° Celsius niedrigeren Schmelzpunkt als die andere Schicht aufweist. Bei dieser Ausgestaltung geht die Faservlieslage nur oberflächlich eine Verbindung mit der gummielastischen Lage ein, da durch die unterschiedlichen Schmelzpunkte verhindert werden kann, daß auch die Teilschicht mit dem höheren Schmelzpunkt erweicht und die Fasern der Faservlieslage in diese Teilschicht eindringen.

Bei einer praktischen Ausgestaltung kann die als Verbindungsfläche dienende Schicht aus copolymeren Rohstoffen mit einer von wenigstens 2,5 µm bestehen und die andere Schicht aus elastomeren, polymeren und copolymeren Rohstoffen mit einer Dicke zwischen 8 - 100 µm, vorzugsweise zwischen 15 bis 80 µm.

Alternativ kann die als Film oder Folie ausgebildete gummielastische Lage heterogen ausgebildet sein und elastomere, polymere und copolymere Rohstoffe umfassen.

Bei der heterogenen Ausbildung sind die genannten Rohstoffe zwar vermischt, jedoch ist die Vermischung nicht homogen, so daß die den Rohstoffen anhaftenden spezifischen Eigenschaften, nämlich Gummielastizität und Adhäsivität bzw. Kohäsivität gleichwohl erhalten bleiben.

Im Falle einer als Faserstruktur ausgebildeten gummielastischen Lage können die Fasern aus Bikomponenten-Fasern bestehen, wobei die eine Komponente einen um wenigstens 20° Celsius niedrigeren Schmelzpunkt als die andere Komponente aufweist.

Dadurch läßt sich erreichen, daß während des Bondingprozesses nur die Komponenten mit der niedrigeren Schmelztemperatur erweichen, während die anderen Komponenten nicht erweichen und dadurch sichergestellt ist, daß die Faservlieslage ihre Faserstruktur beibehält.

Alternativ kann auch die Faserstruktur aus Hetrofil-Fasern bestehen, die elastomere polymere und copolymere Rohstoffe umfaßt.

Nachfolgend wird die Erfindung anhand der Zeichnung erläutert. In dieser zeigen:
- Fig. 1: eine Vorrichtung zur Herstellung eines mehrlagigen Flächengebildes,
- Fig. 2: eine Draufsicht auf ein Flächengebilde mit vorverstreckter unelastische Faservlieslage im entspannten Zustand,
- Fig. 3: eine Draufsicht auf das Flächengebilde gemäß Fig. 2 im gedehnten Zustand,
- Fig. 4: einen Schnitt durch ein Flächengebilde mit Dehnbarkeit in Vorverstrekkungsrichtung im entspannten Zustand und
- Fig. 5: einen Schnitt durch das Flächengebilde gemäß Fig. 4 im gedehnten Zustand.

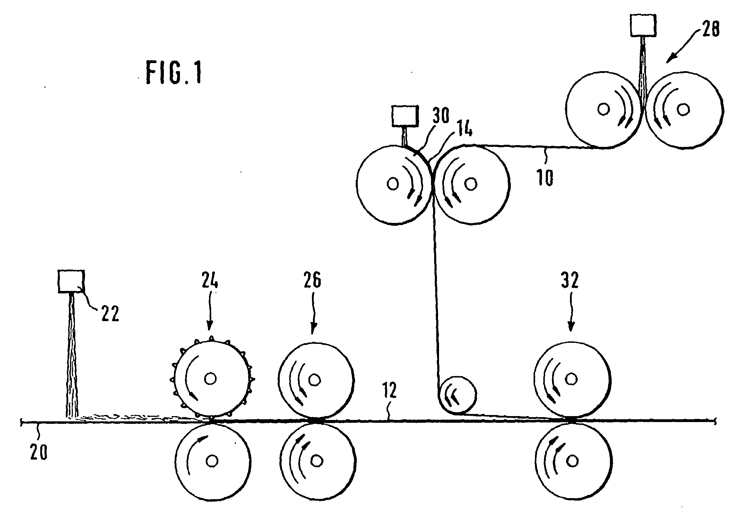

Fig. 1 zeigt eine Vorrichtung zur Herstellung eines mehrlagigen elastischen Flächengebildes. Auf dem Legeband 20 einer Legevorrichtung wird zunächst eine Vlieslage hergestellt, was alternativ nach dem Spinnvliesverfahren oder Schmelzblasverfahren erfolgen kann. Dazu befindet sich oberhalb des Legebandes 20 eine Düsenvorrichtung 22 für die austretende Schmelze, die im Falle einer Spinnvorrichtung als Spinnbalken und im Falle einer Schmelzblasvorrichtung als Anordnung von Schmelzblasdüsen ausgeführt sein kann.

Die Vlieslage gelangt anschließend zu einer Kalanderwalzenanordnung 24, mittels der durch z. B. Thermo- oder Ultraschallbondierung eine Verfestigung der Vlieslage vorgenommen wird.

Danach wird die verfestigte Vlieslage 12 über eine Streckvorrichtung 26 aus Walzen, die eine gegenüber der Kalanderwalzenanordnung 24 höhere Transportgeschwindigkeit aufweisen, vorverstreckt.

Von einer Vorratsrolle oder einer gesonderten Produktionsvorrichtung 28 wird eine gummielastische Folie 10 bereitgestellt, die über eine Bedruckungswalze 30 läuft und mit einer dehäsiven Schicht 14 entsprechend einem durch die Bedruckungswalze 30 vorgegebenen Muster versehen wird. Dadurch deckt die aufgetragene dehäsive Schicht 14 nicht vollflächig die gummielastische Folie 10, sondern läßt Bereiche frei, die als spätere bleibende Verbindungsstellen 16 dienen.

Ist eine Dehnbarkeit des mehrlagigen Flächengebildes auch in Vorverstreckungsrichtung gewünscht, so wird die gummielastische Folie 10 durch unterschiedlich schnell laufende Transportwalzen zusätzlich in Produktionsrichtung gedehnt. Dann wird die gummielastische Folie 10 mit der vorverstreckten Faservlieslage 12 in Kontakt gebracht und durchläuft eine Bondiervorrichtung 32 mit glatten beheizten Walzen. Bei dem Bondierprozeß werden die gummielastische Lage 10 und die Faservlieslage 12 an den von der dehäsiven Beschichtung 14 freien Stellen dauerhaft kontaktiert, während sie an den übrigen Stellen nur eine vorläufige Verbindung eingehen.

Wurde die gummielastische Folie 10 durch unterschiedlich schnell laufende Transportwalzen zuvor in Produktionsrichtung gedehnt, so wird das Flächengebilde über weitere unterschiedlich schnell laufende Transportwalzen entspannt, worauf sich die Faservlieslage 12 zwischen den Verbindungsstellen 16 wieder von der gummielastischen Lage 10 löst und dort aufwirft. Anderenfalls lösen sich die vorläufigen Verbindungsbereiche durch Dehnen des Flächengebildes quer zur Produktionsrichtung.

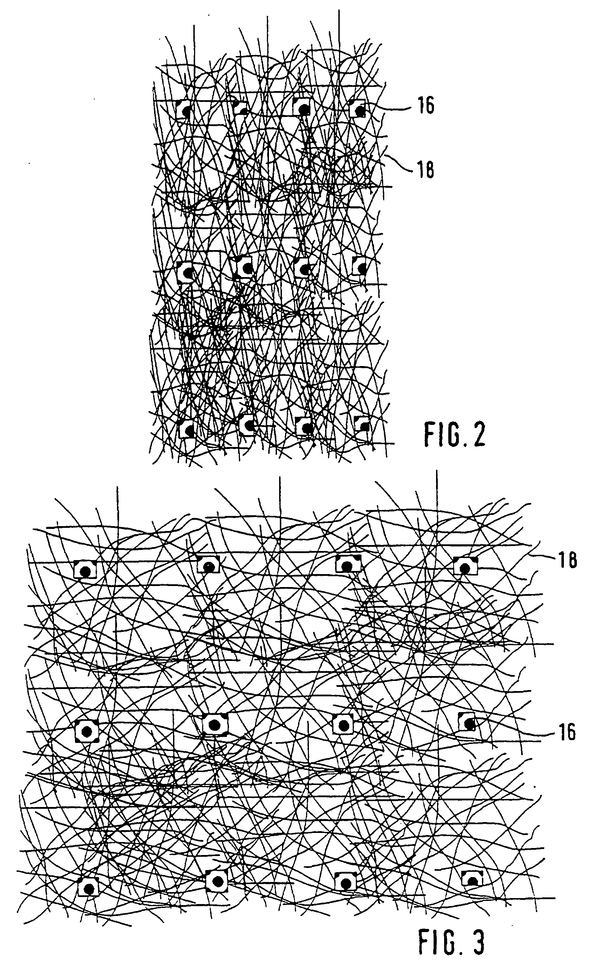

Die Figuren 1 und 2 zeigen eine Draufsicht auf ein mehrlagiges elastisches Flächengebilde mit vorverstreckter unelastischer Faservlieslage 12. Die Fasern der Vlieslage sind in Fig. 2, die den entspannten Zustand zeigt, überwiegend in Richtung der Vorverstreckung ausgerichtet. Zur Veranschaulichung der Unterschiede des entspannten und gedehnten Zustandes sind außerdem die Verbindungsstellen 16 mit der gummieleastischen Lage dargestellt. Wird das Flächengebilde in Querrichtung zur Vorverstreckungsrichtung gedehnt, so verschwenken die Fasern 18 der Faservlieslage 12 um die Verbindungsstellen 16 als Schwenkpunkte und richten sich von der ursprünglich in Vorverstreckungsrichtung weisenden Ausrichtung mehr und mehr in Dehnungsrichtung aus.

Bei kleine Dehnungen ist der Schwenkwinkel relativ gering, so daß kein Widerstand gegen die Dehnung eintritt und allein die Eigenschaften der elastischen Lage das Dehnungsverhalten bestimmen. Je weiter die Fasern 18 in Dehnungsrichtung ausgerichtet werden, umso größer wächst der Widerstand gegen weiteres Dehnen bis schließlich die Wegreserve erschöpft ist. Einer Dehnung in Verstreckungsrichtung wird bereits anfänglich ein großer Widerstand entgegengesetzt. Da die Fasern durch die Vorverstreckung eine erhöhte Festigkeit gegen weitere Verstreckung aufweisen, ergibt sich auch eine Sicherheit gegen Überdehnung, wenn die Wegreserve erschöpft ist.

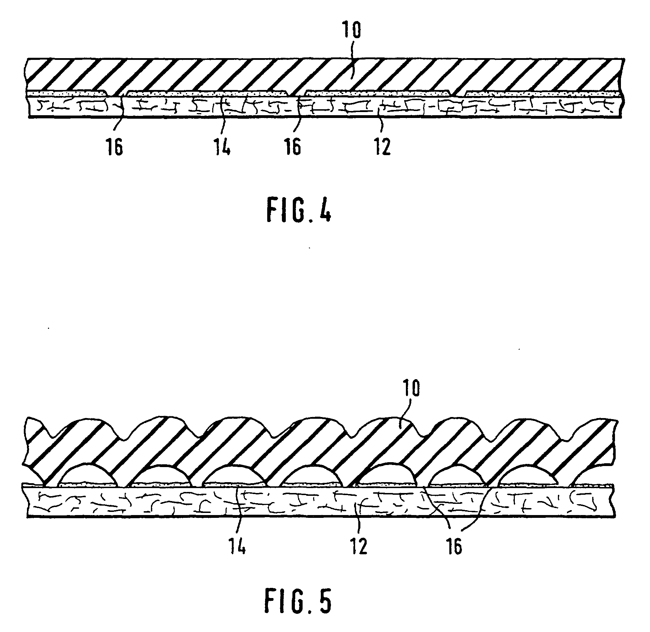

Fig. 4 und 5 zeigen einen Schnitt durch ein mehrlagiges elastisches Flächengebilde aus einer gummielastischen Lage 10 und einer Faservlieslage 12. Die gummielastische Lage 10 trägt eine in Form eines Musters aufgetragene dehäsive Beschichtung 14. Dieses Muster läßt Bereiche frei, die als vorgesehene Verbindungsstellen 16 der beiden Lagen 10, 12 dienen. An diesen vorgesehenen Verbindungsstellen 16 ist die gummielastische Lage 10 mit der Faservlieslage 12 verklebt oder oberflächlich verschmolzen.

Das in den Figuren 4 und 5 dargestellte Flächengebilde ist zusätzlich in Vorverstreckungsrichtung dehnbar. Fig. 4 zeigt dabei den entspannten und Fig. 5 den gespannten Zustand. Bei dieser Darstellung haftet die Faservlieslage 12 an der gummielastischen Lage 10 an den Verbindungsstellen 16, während sich in den übrigen Bereichen, die mit der dehäsiven Beschichtung 14 versehen sind, die Faservlieslage 12 abhebt und aufwirft.

## Patentansprüche

1. Verfahren zur Herstellung eines mehrlagigen elastischen Flächengebildes aus wenigstens einer gummielastischen Lage aus einem Film, einer Folie oder einer Faserstruktur und wenigstens einer mit der gummielastischen Lage an bleibenden Verbindungsstellen verbundenen verfestigten unelastischen Faservlieslage, wobei die unelastische Faservlieslage vor ihrer Verbindung mit der gummielastische Lage vorverstreckt wird und die unelastische Faservlieslage im vorverstreckten Zustand mit der gummielastischen Lage verbunden wird, **dadurch gekennzeichnet, dass**
die Fasern der unelastischen Faservlieslage im wesentlichen in Richtung der Vorverstreckungsrichtung ausgerichtet werden und dass zwischen der unelastischen Faservlieslage und der gummielastischen Lage teilflächig eine dehäsive Schicht angeordnet wird, wobei ein von der dehäsiven Schicht freigelassener Bereich zwischen der gummielastischen Lage und der Faservlieslage eine bleibende Verbindungsstelle wird.

2. Verfahren nach Anspruch 1, **dadurch gekennzeichnet, daß** zusätzlich die gummielastische Lage vor der Verbindung mit der unelastischen Faservlieslage in Richtung der Vorverstreckungsrichtung der unelastischen Faservlieslage gedehnt wird, im gedehnten Zustand mit der vorverstreckten unelastische Faservlieslage verbunden wird und anschließend das entstandene mehrlagige Flächengebilde entspannt wird.

3. Verfahren nach Anspruch 1 oder 2, **dadurch gekennzeichnet, daß** mittels eines Bondingprozesses eine vollflächige Verbindung zwischen der gummielastischen Lage und der unelastischen Faservlieslage erzeugt wird und daß Bereiche der vollflächigen Verbindung bei nachfolgender Dehnung in Querrichtung zur Vorverstreckungsrichtung und bei zusätzlicher während der Verbindung mit der ververstreckten unelastischen Faservlieslage in Richtung der Vorverstreckungsrichtung gedehnter gummielastischer Lage bei nachfolgender Entspannung bis auf bleibende Verbindungsstellen wieder gelöst werden.

4. Verfahren nach einem der Ansprüche 1 bis 3, **dadurch gekennzeichnet, daß** die unelastische Faservlieslage längs oder quer zur Produktionsrichtung vorverstreckt wird.

5. Verfahren nach Anspruch 4, **dadurch gekennzeichnet, daß** die unelastische Faservlieslage bis mindestens 50 % der maximalen Reißdehnung vorverstreckt wird.

6. Verfahren nach Anspruch 4 oder 5, **dadurch gekennzeichnet, daß** die unelastische Faservlieslage so vorverstreckt wird, daß sie bei Vorverstreckung längs zur Produktionsrichtung ein Festigkeitsverhältnis längs zu quer von 0,8 zu 1,2 bis 20 zu 3 und bei Vorverstreckung quer zur Produktionsrichtung ein Festigkeitsverhältnis quer zu längs von 0.8 zu 1,2 bis 20 zu 3 aufweist.

7. Verfahren nach einem der Ansprüche 2 bis 6, **dadurch gekennzeichnet, daß** die gummielastische Lage vor ihrer Verbindung mit der unelastischen Faservlieslage um bis zu 150 % ihrer Ausgangslänge gedehnt wird.

8. Verfahren nach einem der Ansprüche 3 bis 7, **dadurch gekennzeichnet, daß** die dehäsive Beschichtung mit Farbstoffen oder Farbpigmenten versehen wird.

9. Verfahren nach einem der Ansprüche 3 bis 8, **dadurch gekennzeichnet, daß** die dehäsive Beschichtung auf 5 % bis 90 % der Verbindungsfläche aufgebracht wird.

10. Mehrlagiges elastisches Flächengebilde aus wenigstens einer gummielastischen Lage (10) aus einem Film, einer Folie oder einer Faserstruktur und wenigstens eine mit der gummielastischen Lage (10) an bleibenden Verbindungsstellen (16) verbundenen verfestigten unelastischen Faservlieslage (12), wobei die unelastische Faservlieslage (12) vorverstreckt ist, **dadurch gekennzeichnet, dass**
das Flächengebilde quer zur Vorverstreckungsrichtung reversibel dehnbar ist, indem die Fasern (18) der unelastischen Faservlieslage (12) zwischen den bleibenden Verbindungsstellen (16) ihre Ausrichtung in Dehnungsrichtung in Abhängigkeit des Dehnungsgrades ändern und dass zwischen der unelastischen Faservlieslage und der gummielastischen Lage teilflächig eine dehäsive Schicht angeordnet ist, wobei ein von der dehäsiven Schicht freigelassener Bereich zwischen der gummielastischen Lage und der Faservlieslage eine bleibende Verbindungsstelle bildet.

11. Mehrlagiges elastisches Flächengebilde nach Anspruch 10, **dadurch gekennzeichnet, daß** zusätzlich die gummielastische Lage (10) bei der Verbindung mit der ververstreckten unelastischen Faservlieslage (12) in Vorverstreckungsrichtung gedehnt und nach der Verbindung entspannt ist, wobei sich die Fasern (18) der unelastischen Faservlieslage (12) zwischen den bleibenden Verbindungsstellen (16) wellenartig aufwerfen, und daß das Flächengebilde in Richtung der Vorverstreckungsrichtung reversibel dehnbar ist, indem sich die Aufwerfungen der Fasern (18) zwischen den bleibenden Verbindungsstellen (16) in Abhängigkeit des Dehnungsgrades reduzieren.

12. Mehrlagiges elastisches Flächengebilde nach Anspruch 10 oder 11, **dadurch gekennzeichnet, daß** sich die bei einem Bondingprozeß eingetretene vollflächige Verbindung zwischen der gummielastischen Lage (10) und der unelastischen Faservlieslage (12) bei nachfolgender Dehnung in Querrichtung zur Vorverstreckungsrichtung und bei zusätzlicher während der Verbindung mit der ververstreckten unelastischen Faservlieslage (12) in Vorverstreckungsrichtung gedehnter gummielastischer Lage (10) bei nachfolgender Entspannung bis auf bleibende Verbindungsstellen (16) wieder löst.

13. Mehrlagiges elastisches Flächengebilde nach einem der Ansprüche 10 bis 12, **dadurch gekennzeichnet, daß** die unelastische Faservlieslage (12) längs oder quer zur Produktionsrichtung vorverstreckt ist.

14. Mehrlagiges elastisches Flächengebilde nach Anspruch 13, **dadurch gekennzeichnet, daß** die Vorstreckung mindestens 50 % der maximalen Reißdehnung beträgt.

15. Mehrlagiges elastisches Flächengebilde nach Anspruch 13 oder 14, **dadurch gekennzeichnet, daß** die unelastische Faservlieslage (12) bei Vorverstreckung längs zur Produktionsrichtung ein Festigkeitsverhältnis längs zu quer von 0,8 zu 1,2 bis 20 zu 3 und bei Vorverstreckung quer zur Produktionsrichtung ein Festigkeitsverhältnis quer zu längs von 0,8 zu 1,2 bis 20 zu 3 aufweist.

16. Mehrlagiges elastisches Flächengebilde nach einem der Ansprüche 11 bis 15, **dadurch gekennzeichnet, daß** die gummielastischen Lage (10) bei Durchführung des Bondingprozesses um bis zu 150 % ihrer Ausgangslänge gedehnt ist.

17. Mehrlagiges elastisches Flächengebilde nach einem der Ansprüche 12 bis 16, **dadurch gekennzeichnet, daß** die dehäsive (14) Beschichtung farbig ausgestaltet ist.

18. Mehrlagiges elastisches Flächengebilde nach einem der Ansprüche 12 bis 17, **dadurch gekennzeichnet, daß** bei dehäsiver Beschichtung (14) diese Beschichtung 5 % bis 90 % der Verbindungsfläche bedeckt.

19. Mehrlagiges elastisches Flächengebilde nach einem der Ansprüche 12 bis 18, **dadurch gekennzeichnet, daß** bei einer als Film oder Folie ausgebildeten gummielastischen Lage (10) diese Lage einen mehrschichtigen Aufbau besitzt, wobei eine der Schichten als Verbindungsfläche dient und einen um wenigsten 20 °C niedrigeren Schmelzpunkt als die andere Schicht aufweist.

20. Mehrlagiges elastisches Flächengebilde nach Anspruch 19, **dadurch gekennzeichnet, daß** die als Verbindungsfläche dienende Schicht aus copolymeren Rohstoffen besteht und eine Dicke von wenigsten 2,5 µm aufweist und daß die andere Schicht aus elastomeren, polymeren und copolymeren Rohstoffen besteht und eine Dicke zwischen 8 bis 100 µm vorzugsweise zwischen 15 bis 80 µm aufweist.

21. Mehrlagiges elastisches Flächengebilde nach einem der Ansprüche 12 bis 18, **dadurch gekennzeichnet, daß** bei einer als Film oder Folie ausgebildeten gummielastischen Lage (10) diese Lage heterogen ausgebildet ist und elastomere, polymere und copolymere Rohstoffe umfaßt.

22. Mehrlagiges elastisches Flächengebilde nach einem der Ansprüche 12 bis 18, **dadurch gekennzeichnet, daß** bei einer als Faserstruktur ausgebildeten gummielastischen Lage (10) diese Lage aus Bikomponenten-Fasern besteht, wobei die eine Komponente einen um wenigsten 20 °C niedrigeren Schmelzpunkt als die andere Komponente aufweist.

23. Mehrlagiges elastisches Flächengebilde nach Anspruch 22, **dadurch gekennzeichnet, daß** die höherschmelzende Komponente aus polymeren Rohstoffen und die niedrigerschmelzende Komponente aus elastomeren und copolymeren Rohstoffen besteht.

24. Mehrlagiges elastisches Flächengebilde nach einem der Ansprüche 12 bis 18, **dadurch gekennzeichnet, daß** bei einer als Faserstruktur ausgebildeten gummielastischen Lage (10) diese Lage aus Heterofil-Fasern besteht und elastomere, polymere und copolymere Rohstoffe umfaßt.

## Claims

1. Process for production of a multi-layer elastic flat structure of at least one rubber elastic layer of a film, foil or fibre structure and at least one non-elastic fibre fleece layer attached to the rubber elastic layer connected at permanent connection points, where the non-elastic fibre fleece layer is prestretched before connection with the rubber elastic layer and the non-elastic fibre fleece layer is connected in prestretched state with the rubber elastic layer, **characterised in that** the fibres of the non-elastic fibre fleece layer are essentially aligned in the direction of the pre-stretching direction and that between the non-elastic fibre fleece layer and the rubber elastic layer over a part area is arranged a dehesive layer, where an area free from the dehesive layer between the rubber elastic layer and the fibre fleece layer becomes a permanent connection point.

2. Process according to claim 1, **characterised in that** in addition, before connection with the non-elastic fibre fleece layer, the rubber elastic layer is stretched in the direction of the pre-stretching direction of the non-elastic fibre fleece layer, connected in stretched state with the pre-stretched non-elastic fibre fleece layer and then the corresponding multi-layer flat structure is relaxed.

3. Process according to claim 1 or 2, **characterised in that** by means of a bonding process a complete surface connection is created between the rubber elastic layer and the non-elastic fibre fleece layer and that areas of the complete surface connection, on subsequent stretching in the direction transverse to the pre-stretching direction and on additional stretching of the rubber elastic layer in the direction of the pre-stretching direction during connection with the prestretched non-elastic fibre fleece layer, are released again on subsequent relaxation except at the permanent connection points.

4. Process according to any of claims 1 to 3, **characterised in that** the non-elastic fibre fleece layer is prestretched across or along the production direction.

5. Process according to claim 4, **characterised in that** the non-elastic fibre fleece layer is pre-stretched up to at least 50% of the maximum elongation at tear.

6. Process according to claim 4 or 5, **characterised in that** the non-elastic fibre fleece layer is pre-stretched so that on pre-stretching along the production direction a strength ratio longitudinal to transverse of 0.8 to 1.2 up to 20 to 3 is achieved, and on pre-stretching across the production direction a strength ratio transverse to longitudinal of 0.8 to 1.2 up to 20 to 3.

7. Process according to any of claims 2 to 6, **characterised in that** before connection with the non-elastic fibre fleece layer, the rubber elastic layer is stretched up to 150% of its original length.

8. Process according to any of claims 3 to 7, **characterised in that** the dehesive coating is given dyes or colour pigments.

9. Process according to any of claims 3 to 8, **characterised in that** the dehesive coating is applied to 5% to 90% of the connecting surface.

10. Multi-layer elastic flat structure of at least one rubber elastic layer (10) of a film, foil or fibre structure and at least one non-elastic fibre fleece layer (12) attached to the rubber elastic layer (10) connected at permanent connection points (16), where the non-elastic fibre fleece layer (12) is pre-stretched, **characterised in that** the flat structure can be stretched reversibly transverse to the pre-stretching direction as the fibres (18) of the non-elastic fibre fleece layer (12) change their orientation in the elongation direction between the permanent connection points (16) as a function of the degree of stretching and that between the non-elastic fibre fleece layer and the rubber elastic layer is arranged over a part area a dehesive layer, where an area left free from the dehesive layer between the rubber elastic layer and the fibre fleece layer forms a permanent connection point.

11. Multi-layer elastic flat structure according to claim 10, **characterised in that** additionally the rubber elastic layer (10), on connection with the pre-stretched non-elastic fibre fleece layer (12), is stretched in the pre-stretching direction and after connection relaxed, where the fibres (18) of the non-elastic fibre fleece layer (12) ripple between the permanent connection points (16), and that the flat structure can be stretched reversibly in the direction of the pre-stretching direction as the ripples of the fibres (18) between the permanent connection points (16) diminish as a function of the degree of stretching.

12. Multi-layer elastic flat structure according to claim 10 or 11, **characterised in that** the complete surface connection occurring in a bonding process between the rubber elastic layer (10) and the non-elastic fibre fleece layer (12), on subsequent stretching in the transverse direction to the pre-stretching direction and on additional stretching of the rubber elastic layer (10) in the pre-stretching direction during connection with the pre-stretched non-elastic fibre fleece layer (12), is released again on subsequent relaxation except at the permanent connection points (16).

13. Multi-layer elastic flat structure according to any of claims 10 to 12, **characterised in that** the non-elastic fibre fleece layer (12) is pre-stretched along or across the production direction.

14. Multi-layer elastic flat structure according to claim 13, **characterised in that** the pre-stretching amounts to at least 50% of the maximum elongation at tear.

15. Multi-layer elastic flat structure according to claim 13 or 14, **characterised in that** the non-elastic fibre fleece layer (12) on pre-stretching along the production direction has a strength ratio longitudinal to transverse of 0.8 to 1.2 to 20 to 3 and on pre-stretching across the production direction has a strength ratio transverse to longitudinal of 0.8 to 1.2 to 20 to 3.

16. Multi-layer elastic flat structure according to any of claims 11 to 15, **characterised in that** on performance of the bonding process the rubber elastic layer (10) is stretched up to 150% of its original length.

17. Multi-layer elastic flat structure according to any of claims 12 to 16, **characterised in that** the dehesive coating (14) is given a colour.

18. Multi-layer elastic flat structure according to any of claims 12 to 17, **characterised in that** on dehesive coating (14), this coating covers 5 to 90% of the connecting area.

19. Multi-layer elastic flat structure according to any of claims 12 to 18, **characterised in that** when the rubber elastic layer (10) is formed of a film or foil, this layer consists of a laminate structure where one of the layers serves as a connecting surface and has a melt point at least 20EC lower than that of the other layer.

20. Multi-layer elastic flat structure according to claim 19, **characterised in that** the layer serving as a connecting surface consists of copolymer raw materials and has a thickness of at least 2.5 µm and that the other layer consists of elastomer, polymer and copolymer raw materials and has a thickness of between 8 to 100 µm, preferably 15 to 18 µm.

21. Multi-layer elastic flat structure according to any of claims 12 to 18, **characterised in that** when the rubber elastic layer (10) is formed of a film or foil, this layer is formed heterogeneous and comprises elastomer, polymer and copolymer raw materials.

22. Multi-layer elastic flat structure according to any of claims 12 to 18, **characterised in that** when the rubber elastic layer (10) is formed as a fibre structure, this layer consists of bicomponent fibres where the one component has a melt point at least 20EC lower than that of the other component.

23. Multi-layer elastic flat structure according to claim 22, **characterised in that** the higher-melting component consists of polymer raw materials and the lower-melting component consists of elastomer and copolymer raw materials.

24. Multi-layer elastic flat structure according to any of claims 12 to 18, **characterised in that** when the rubber elastic layer (10) is formed as a fibre structure, this layer consists of heterofilar fibres and comprises elastomer, polymer and copolymer raw materials.

## Revendications

1. Procédé de fabrication d'un produit stratifié élastique à partir d'au moins une couche à élasticité du caoutchouc à partir d'un film, d'une feuille ou d'une structure de fibres, et au moins une couche de matelas de fibres non élastique durcie, reliée à la couche à élasticité du caoutchouc en des emplacements de liaisons restants, la couche de matelas de fibres non élastique étant, avant sa liaison avec la couche à élasticité du caoutchouc, pré allongée et la couche de matelas de fibres non élastique étant reliée, en l'état pré allongé, à la couche à élasticité du caoutchouc, **caractérisé en ce que**
les fibres de la couche de matelas de fibres non élastique sont orientées, pour l'essentiel, dans la direction du pré allongement et **en ce qu'**entre la couche de matelas de fibres non élastique et la couche à élasticité du caoutchouc, une couche de déhésif est déposée, un domaine laissé libre de la couche déhésive entre la couche à élasticité du caoutchouc et la couche de matelas de fibres non élastique étant un emplacement de liaison restant.

2. Procédé suivant la revendication 1, **caractérisé en ce que**, en outre, la couche à élasticité du caoutchouc, avant la liaison avec la couche de matelas de fibres non élastique dans la direction de la direction de pré allongement de la couche de matelas de fibres non élastique, est élargie puis est reliée à l'état élargi avec la couche de matelas de fibres non élastique pré allongée et ensuite le produit stratifié final est détendu.

3. Procédé suivant la revendication 1 ou 2, **caractérisé en ce que**, au moyen d'un procédé de liaison, une liaison sur toute la surface entre la couche à élasticité du caoutchouc et la couche de matelas de fibres non élastique est réalisée et **en ce que** les domaines de la liaison sur toute la surface sont encore détachés par dilatation suivant dans la direction perpendiculaire à la direction de pré allongement et par, en outre, pendant la liaison avec la couche de matelas de fibres non élastique pré allongée dans la direction de pré allongement de la couche à élasticité du caoutchouc dilatée par détente suivant jusqu'aux emplacements restants.

4. Procédé suivant une des revendications 1 à 3, **caractérisé en ce que** la couche de matelas de fibres non élastique est pré allongée en longueur ou perpendiculairement à la direction de production.

5. Procédé suivant la revendication 4, **caractérisé en ce que** la couche de matelas de fibres non élastique est pré allongée jusqu'à 50 % de l'élongation à la rupture maximale.

6. Procédé suivant la revendication 4 ou 5, **caractérisé en ce que** la couche de matelas de fibres non élastique est pré allongée de manière qu'elle présente, par pré allongement le long de la direction de production, une proportion de solidité longitudinale à perpendiculaire de 0,8 à 1,2 jusqu'à 20 à 3 et, par prolongement perpendiculairement à la direction de production, une proportion de solidité perpendiculaire à longitudinal de 0,8 à 1,2 jusqu'à 20 à 3.

7. Procédé suivant une des revendications 2 à 6, **caractérisé en ce que** la couche à élasticité du caoutchouc est, avant sa liaison avec la couche de matelas de fibres non élastique, étirée jusqu'à 150 % de sa longueur de sortie.

8. Procédé suivant une des revendications 3 à 7, **caractérisé en ce que** la couche déhésive est pourvue de matières colorantes ou de pigments de couleur.

9. Procédé suivant une des revendications 3 à 8, **caractérisé en ce que** la couche déhésive est introduite sur de 5 % à 90 % de la surface de liaison.

10. Produit stratifié élastique fait à partir d'au moins une couche à élasticité du caoutchouc (10) sous forme d'un film, d'une feuille ou d'une structure de fibres et au moins d'une couche de matelas de fibres non élastique durcie (12) reliée à la couche à élasticité du caoutchouc (10) à des emplacements de liaisons restants (16), la couche de matelas de fibres non élastique (12) étant pré allongée, **caractérisé en ce que**
le produit est extensible perpendiculairement à la direction de pré allongement d'une manière réversible, dans lequel les fibres (18) de la couche de matelas de fibres non élastique (12) entre les emplacements de liaison restants (16) modifient leur direction externe dans la direction d'extension en fonction du degré d'extension et **en ce que**, entre la couche de matelas de fibres non élastique et la couche à élasticité du caoutchouc partiellement est déposée une couche déhésive, un domaine libéré de couche déhésive entre la couche à élasticité du caoutchouc et la couche de matelas de fibres non élastique créant un emplacement de liaison restant.

11. Produit stratifié élastique suivant la revendication 10, **caractérisé en ce que**, de plus, la couche à élasticité du caoutchouc (10) est élargie par la liaison avec la couche de matelas de fibres non élastique (12) dans la direction de pré allongement et détendue après la liaison, les fibres (18) de la couche de matelas de fibres non élastique (12) se soulevant entre les emplacements de liaison restants (16) en forme d'ondes, et **en ce que** le produit peut être élargi dans la direction de la direction de pré allongement, dans lequel les soulèvements des fibres entre les emplacements de liaison restants (16) se réduisent en proportion du degré d'élargissement.

12. Produit stratifié élastique suivant la revendication 10 ou 11, **caractérisé en ce que** la liaison, sur toute la surface, effectuée par un procédé de soudage entre la couche à élasticité du caoutchouc (10) et la couche de matelas de fibres non élastique (12) est encore détruite par étirement arrivant après dans la direction perpendiculaire à la direction de pré allongement et par, de plus, pendant la liaison avec la couche de matelas de fibres non élastique pré allongée (12) dans la direction de pré allongement de la couche à élasticité du caoutchouc (10) élargie par détente après coup jusqu'aux emplacements de liaison restants (16).

13. Produit stratifié élastique suivant une des revendications 10 à 12, **caractérisé en ce que** la couche de matelas de fibres non élastique (12) est pré allongée longitudinalement ou perpendiculairement à la direction de production.

14. Produit stratifié élastique suivant la revendication 13, **caractérisé en ce que** le pré allongement vaut au moins 50 % de l'élongation à rupture.

15. Produit stratifié élastique suivant la revendication 13 ou 14, **caractérisé en ce que** la couche de matelas de fibres non élastique (12) présente par pré allongement longitudinalement à la direction de production un rapport de solidité longitudinal à perpendiculaire allant de 0,8 à 1,2 jusqu'à 20 à 3 et par pré allongement perpendiculairement à la direction de production un rapport de solidité perpendiculaire à longitudinal de 0,8 à 1,2 jusqu'à 20 à 3.

16. Produit stratifié élastique suivant une des revendications 11 à 15, **caractérisé en ce que** la couche à élasticité du caoutchouc (10) est étirée par exécution du procédé de soudage allant jusqu'à 150 % de sa longueur de sortie.

17. Produit stratifié élastique suivant une des revendications 12 à 16, **caractérisé en ce que** la couche déhésive (14) est réalisée en couleur.

18. Produit stratifié élastique suivant une des revendications 12 à 17, **caractérisé en ce que**, en ce qui concerne la couche déhésive (14), cette couche recouvre 5 % à 90 % de la surface de liaison.

19. Produit stratifié élastique suivant une des revendications 12 à 18, **caractérisé en ce que**, en ce qui concerne une couche à élasticité du caoutchouc (10) formée comme film ou feuille, cette couche occupe une structure stratifiée, une des couches servant de surface de liaison et présentant un point de fusion inférieur à au moins 20 °C de l'autre couche.

20. Produit stratifié élastique suivant la revendication 19, **caractérisé en ce que** la couche servant de surface de liaison est en matière première de copolymères et présente une épaisseur d'au moins 2,5 µm et **en ce que** l'autre couche est en matière première élastomère, polymère et copolymère et présente une épaisseur comprise entre 8 et 100 µm, de préférence entre 15 et 80 µm.

21. Produit stratifié élastique suivant une des revendications 12 à 18, **caractérisé en ce que**, en ce qui concerne une couche à élasticité du caoutchouc (10) formée en film ou feuille, cette couche est formée hétérogène et comporte des matières premières en élastomère, polymère et copolymère.

22. Produit stratifié élastique suivant une des revendications 12 à 18, **caractérisé en ce que**, en ce qui concerne une couche (10) formée en structure de fibres, cette couche est formée de fibres à deux composants, le premier composant présentant un point de fusion inférieur d'au moins 20 °C à l'autre composant.

23. Produit stratifié élastique suivant la revendication 22, **caractérisé en ce que** le composant qui fond à plus haute température consiste en matière première polymère et le composant qui fond à plus basse température en matière première d'élastomère et de copolymère.

24. Produit stratifié élastique suivant une des revendications 12 à 18, **caractérisé en ce que**, en ce qui concerne la couche à élasticité du caoutchouc (10) formée en structure de fibres, cette couche consiste en des fibres d'hétérofil et comporte une matière première d'élastomère, de polymère et de copolymère.
